Europäisches Patentamt

European Patent Office

Office européen des brevets

(11) Publication number: **0 475 412 A2**

## EUROPEAN PATENT APPLICATION

(21) Application number: **91115486.2**

(22) Date of filing: **12.09.91**

(51) Int. Cl.⁵: **B32B 5/26**, B32B 1/08

(30) Priority: **13.09.90 JP 241175/90**

(43) Date of publication of application:
**18.03.92 Bulletin 92/12**

(84) Designated Contracting States:
**DE FR GB**

(71) Applicant: **PETOCA Ltd.**
**No. 3-6, Kioi-cho**
**Chiyoda-ku, Tokyo(JP)**

(72) Inventor: **Fujiwara, Kikuji**
**Petoca Ltd No.4 Touwada,Kamisu-machi**
**Kashima-gun Ibaraki-ken(JP)**

(74) Representative: **Vossius & Partner**
**Siebertstrasse 4 P.O. Box 86 07 67**
**W-8000 München 86(DE)**

(54) Carbon fiber-reinforced plastic pipe-shaped article and process for producing the same.

(57) In the disclosed carbon fiber-reinforced plastic pipe-shaped article, at least one layer [A] of filament strands mainly composed of a carbon fiber and/or an aggregation(s) thereof and at least one layer [B] of a fibrous sheet material mainly composed of a carbon fiber are used as the layers of reinforcing fiber materials, which are preferably laminated in a multi-layer fashion. The layers of the reinforcing fiber materials are formed through filament, tape or sheet winding thereof before, simultaneously with or after impregnation thereof with a resin, which is later cured.

The present invention relates to a carbon fiber-reinforced plastic pipe-shaped article and a process for producing the same.

More particularly, the present invention relates to an inexpensive, excellent, carbon fiber-reinforced plastic pipe-shaped article using a relatively inexpensive, fibrous sheet material of carbon fiber as a reinforcing fiber material and a process for producing the same using such a fibrous sheet material.

Related Art

Carbon fiber filaments (continuous carbon fibers) have heretofore been used as reinforcing fibers of almost all carbon fiber-reinforced plastics. In most cases where such carbon fiber-reinforced plastics are used as aviation parts, carbon fiber filaments are arrayed in parallel with each other and formed into prepregs in the form of a sheet, a several of which are piled up and then heated to effect curing of a resin used therein to form such carbon fiber-reinforced plastics. In most cases of chemical reaction equipment, carbon fiber filaments are formed into a chemical reactor through filament winding thereof.

In forming such shaped articles as mentioned above, there arise various problems such as a difficulty in bending carbon fiber filaments at sharp angles, and a liability to give in-place defects to the resultant shaped articles if any carbon fiber bundles are broken or connected with each other in the course of processing. As a solution to these problems, carbon fiber braids have heretofore been widely used in the sport goods industry.

In general, braids are advantageous in that they are easy of either extension or compression in the axial direction thereof, but involve a problem that the braided structure thereof is unstable in fiber orientation. Thus, carbon fiber braids are unsuitable as a reinforcing fiber material of highly functional, carbon fiber-reinforced plastics produced in accordance with precision designing of fiber orientation.

Japanese Patent Laid-Open No. 86,474/1974 discloses a fiber-reinforced plastic article having the relatively simple shape of a pipe wherein braids are used as a reinforcing fiber material. The process for producing this reinforced pipe-shaped article is simple and cost-saving, but involves a problem that a difficulty is experienced in fiber reinforcement in longitudinal directions of the pipe, parallel with the axial direction of the pipe, and simultaneously in circumferential directions of the pipe, perpendicular to the axial direction of the pipe. This problem is a significant defect of the above-mentioned process because a carbon fiber-reinforced plastic pipe-shaped article is usually required to have a high rigidity in the axial direction thereof as well as in the direction thereof perpendicular to the axial direction thereof.

Carbon fiber-reinforced plastic pipe-shaped articles, which are generally easy to design in terms of the structure of fiber reinforcement because of their relatively simple morphology, are under study with a view to making the process for production thereof simplified and rationalized.

Japanese Patent Laid-Open No. 80,363/1975 discloses a process comprising winding a reinforcing fiber around the outer surface of a flexible tube, inserting the fiber-wound tube into a pipe-like mold, and pressing the fiber-wound tube against the inner wall of the mold by pressure application from the inside of the flexible tube to effect precision molding of a pipe as to the outer size and morphology thereof. This process is advantageous in that the size and morphology of the resulting pipe-shaped article are accurately regulated in a simple way. Since the reinforcing fiber may be moved, or changed in the location thereof, in the course of molding, however, a lot-to-lot as well as position-to-position variation of fiber orientation tends to occur to widely fluctuate the rigidity of the resultant pipe-shaped articles unless a considerably high level of dimensional and morphological accuracy is secured at the stage of reinforcing fiber winding. This problem cannot simply render the process successful in rationalization.

On the other hand, a fibrous sheet material of carbon fiber, which is an aggregation of discontinuous fibers, is inexpensive as compared with carbon fiber filaments. Such a fibrous sheet material is used only as a cement-reinforcing material, an electromagnetic wave-shielding material, an antistatic material, a high-temperature heat insulating material, etc.

A principal object of the present invention is to provide a solution to a problem of considerably limited use applications of conventional carbon fiber-reinforced plastics due to their high costs attributed to the use therein of expensive carbon fiber filaments almost alone as the reinforcing fiber material by replacement thereof with an inexpensive fibrous sheet material.

SUMMARY OF THE INVENTION

As a result of extensive investigations with a view to finding a solution to the above-mentioned problem, the author of the present invention has found out that a carbon fiber-reinforced plastic pipe-shaped article high in flexural rigidity and well balanced in various strengths can be produced from carbon fiber filament strands and a fibrous sheet material of carbon fiber through reinforcement by laminating. Based on this finding, the present invention has been completed.

More specifically, in accordance with a product-related aspect of the present invention, there is provided a carbon fiber-reinforced plastic pipe-shaped article comprising as the layers of reinforcing fiber materials at least one layer [A] of filament strands mainly composed of a carbon fiber and/or an aggregation(s) thereof and at least one layer [B] of a fibrous sheet material mainly composed of a carbon fiber.

In a preferred embodiment of the present invention, the carbon fiber-reinforced plastic pipe-shaped article is of a multi-layer laminated structure comprising at least one layer [A] of the filament strands and/or the aggregation(s) thereof mainly composed of the carbon fiber and at least one layer [B] of the fibrous sheet material mainly composed of the carbon fiber which are laminated on each other.

It is preferable that the layers of the carbon fiber-reinforced plastic pipe-shaped article of the present invention include the innermost and outermost layers each constituted of a layer [A] of the filament strands mainly composed of the carbon fiber and/or the aggregation(s) thereof, and at least one intermediate layer constituted of a layer [B] of the fibrous sheet material mainly composed of the carbon fiber.

It is also preferable that the layer(s) [A] be a parallel arrangement of the filament strands mainly composed of the carbon fiber and/or the aggregation(s) thereof, or a laminated layer formed through filament winding of the filament strands mainly composed of the carbon fiber and/or the aggregation(s) thereof.

It is further preferable that the layer(s) [B] be of a mat, a felt, a non-woven fabric, or a paper-like material which is mainly composed of short carbon fibers spread without any particular orientation thereof. The term "short carbon fibers" or "short fibers" used herein is intended to encompass fibers naturally broken short in the course of melt blow spinning, centrifugal spinning or the like, staple fibers, and short fibers entangled with each other to look like cotton.

In accordance with a processing-related aspect of the present invention, there is provided a process for producing a carbon fiber-reinforced plastic pipe-shaped article comprising as the layers of reinforcing fiber materials at least one layer [A] of filament strands mainly composed of a carbon fiber and/or an aggregation(s) thereof and at least one layer [B] of a fibrous sheet material mainly composed of a carbon fiber: comprising the step (1) of forming around a mandrel and beforehand, simultaneously or subsequently impregnating with a resin at least one layer [A] of filament strands mainly composed of a carbon fiber and/or an aggregation-

(s) thereof and at least one layer [B] of a fibrous sheet material mainly composed of a carbon fiber to form a pipe-shaped, or cylindrical, carbon fiber-resin material, the step (2) of covering the pipe-shaped carbon fiber-resin material with a heat-shrinkable tape or tube, and the step (3) of curing the resin by heating.

In accordance with the same aspect of the present invention, there is also provided a process for producing a carbon fiber-reinforced plastic pipe-shaped article comprising as the layers of reinforcing fiber materials at least one layer [A] of filament strands mainly composed of a carbon fiber and/or an aggregation(s) thereof and at least one layer [B] of a fibrous sheet material mainly composed of a carbon fiber: comprising the step (1) of forming around a mandrel and beforehand, simultaneously or subsequently impregnating with a resin at least one layer [A] of filament strands mainly composed of a carbon fiber and/or an aggregation(s) thereof and at least one layer [B] of a fibrous sheet material mainly composed of a carbon fiber to form a pipe-shaped, or cylindrical, carbon fiber-resin material, the step (2) of semi-curing the resin, the step (3) of covering the resulting pipe-shaped carbon fiber-resin material with a mold, and the step (4) of curing the semi-cured resin by heating under constriction.

## DETAILED DESCRIPTION

The present invention will now be described in detail.

### A. Materials, etc.:

The "fibrous sheet material mainly composed of the carbon fiber and/or the aggregation(s) thereof" to be used in the layer [B] in the present invention is made preferably of a carbon fiber prepared from a polyacrylonitrile type polymer (PAN type polymer), coal pitch or petroleum pitch as the starting material through spinning, infusiblization and carbonization thereof according to a known method, more preferably of a carbon fiber prepared from mesophase pitch as the starting material. It is also preferable to use carbon fiber filaments having high strengths and a high modulus of elasticity to form the fibrous sheet material in the layer [B].

This fibrous sheet material may be in the form of a mat, a felt, a non-woven fabric, or a paper-like material which may be mainly constituted of short fibers and produced by an arbitrary method such as melt blow spinning, spun bonding, paper making or centrifugal spinning. Usable types of the fibrous sheet material further encompass those of the kind as described above further needle-punched in the thickness-wise direction thereof with filaments mainly composed of a carbon fiber, preliminarily shaped with a binder such as polyvinyl alcohol, or woven or needled with filaments or the like.

The carbon fiber constituting the above-mentioned fibrous sheet material to be used in the layer [B] may be used either alone or in combination with other fiber(s) having relatively high rigidity and strengths, such as a glass fiber, an aromatic polyamide fiber (e.g., Kevlar fiber manufacture by Du Pont), a silicon carbide fiber, a boron fiber, or an alumina-silica fiber, in such an amount as not to spoil the functions of the carbon fiber.

The "filament strands mainly composed of the carbon fiber and/or the aggregation(s) thereof" to be used in the layer [A] may be produced from a polyacrylonitrile type polymer (PAN type polymer), coal pitch or petroleum pitch as the starting material through spinning, infusiblization and carbonization thereof according to a known method. The layer [A] is preferably made of high-strength pitch type carbon fiber strands and/or an aggregation(s) thereof having a modulus of elasticity of at least $30 \times 10^3$ kgf/mm$^2$, more preferably a cheap, high-strength pitch type carbon fiber strands and/or an aggregation thereof having a modulus of elasticity of at least $50 \times 10^3$ kgf/mm$^2$. PAN type carbon fibers having a modulus of elasticity of at least $50 \times 10^3$ kgf/mm$^2$ are now so very expensive as compared with pitch type carbon fibers that they are hardly usable. Thus, a PAN type carbon fiber having a modulus of elasticity of about $30 \times 10^3$ kgf/mm$^2$ is generally used.

The filament strands and/or the aggregation(s) thereof to be used in the layer [A] is applied either in the form of filament strands themselves through filament winding thereof or in the form of a tape- or sheet-like prepreg, prepared by impregnating a parallel arrangement of filament strands with a resin and semi-curing the resin, through tape winding or sheet winding thereof to form a preliminarily pipe-shaped material.

The carbon fiber of the above-mentioned filament strands and/or the aggregation(s) thereof to be used in the layer(s) [A] may be used either alone or in combination with other fiber(s) having relatively high rigidity and strengths, such as a glass fiber, an aromatic polyamide fiber (e.g., Kevlar fiber), a silicon carbide fiber, a boron fiber, or an alumina-silica fiber, in such an amount as not to spoil the functions of the carbon fiber.

The reinforcing resin to be used in the present invention may generally be any arbitrary thermosetting resin, examples of which include epoxy resins, phenolic resins, unsaturated polyester resins, and polyimide resins. Among others, expoxy resins are preferred. Representative examples of the epoxy resins include bisphenol A epoxy resins, alicyclic epoxy resins, and novolak epoxy resins.

The viscosity of the reinforcing resin is not particularly restrictive in so far as the operation of impregnation therewith involves no difficulty. However, the viscosity is preferably in the range of about 10 centipoises to about 5 poises. When the viscosity is too high, the reinforcing resin may be used after diluted with a solvent as needed. The amount of the reinforcing resin to be used in the impregnation step is generally in the range of about 2 to 70 wt. % based on the reinforcing fiber materials, but may be arbitrarily varied in accordance with the purpose of using the final pipe-shaped article.

In general, the reinforcing resin is cured by heat treatment.

B. Layer Structure, etc.:

The carbon fiber-reinforced plastic pipe-shaped article of the present invention is preferably of a multi-layer laminated structure comprising at least one layer [A] of the filament strands and/or the aggregation(s) thereof and at least one layer [B] of the fibrous sheet material which are laminated on each other.

Thus, the characteristic feature of the present invention lies in that the pipe-shaped article mainly constituted of carbon fiber(s) according to the present invention is a combination of the layer(s) [B] of the fibrous sheet material with the layer(s) [A] of the filament strands and/or the aggregation(s) thereof.

The direction of arrangement of the filament strands and/or the aggregation(s) thereof in the layer(s) [A] may be arbitrarily selected in accordance with the quality required of the final pipe-shaped article. In order to increase the flexural rigidity of the pipe-shaped article according to the present invention, however, it is preferable that the multi-layer laminated structure of the pipe-shaped article have fibers arrayed substantially in parallel with the axial direction thereof. Thus, it is desirable to dispose the layer [A] of the filament strands and/or the aggregation(s) thereof as the outermost layer of the multi-layer laminated structure of the pipe-shaped article. It is most preferable to dispose the layers [A] of the filament strands and/or the aggregation(s) thereof as both the innermost and outermost layers of the multi-layer laminated structure of the pipe-shaped article according to the present invention.

In the present invention, the use of the layer(s) [B] of the fibrous sheet material in the fiber reinforcement of the pipe-shaped article is advantageous not only in cost reduction but also in substantial uniformity of strength in all planar directions of the sheet material substantially without any weak directions of the sheet material unlike the sheet, or layer, formed of the filament strands and/or the aggregation(s) thereof. This substantial uniformity is attributed to fiber arrangement substantially uniform in all planar directions of the sheet. The foregoing feature of the layer(s) [B] of the fibrous sheet material provides the final reinforced pipe-shaped article with an advantage of hardly involving any defects.

There tends to arise a problem that the layer(s) [B] of the fibrous sheet material of the carbon fiber is poor in sheet stability because of its scarcer interfiber entanglement than that of the same type of fibrous sheet material of a synthetic organic fiber. Accordingly, partial use of filament strands mainly composed of a carbon fiber and/or an aggregation(s) thereof in combination with the fibrous sheet material of the layer(s) [B] is advantageous as a solution to the above-mentioned problem. In some cases, advantageous use may be made of the layer(s) [B] of the fibrous sheet material mainly composed of the carbon fiber which is woven or needled with the above-mentioned filament strands and/or the aggregations. The filaments mainly composed of the carbon fiber which have thus been used to weave or needle therewith the fibrous sheet material to be used in the layer(s) [B] strengthen the fibrous sheet material against tension. This enables the fibrous sheet material to be wound around the mandrel in a state of close contact therewith. The resulting pipe-shaped article advantageously is substantially free of strain and substantially perfectly round in cross section.

The density of carbon fiber filaments to be used to weave or needle therewith the fibrous sheet material to be used in the layer(s) [B], which are desirably oriented in such a direction as to at least cross the londitudinal direction of the mandrel, is preferably determined in due consideration to the short fiber density of the fibrous sheet material, and may be at least $2 /cm^2$ though the density is not particularly restricted.

It is preferable that the short fibers of the layer(s) [B] of the fibrous sheet material be partially oriented at angles of approximately 0° with the filaments rather than oriented perfectly at random in all directions. In this case, the resulting pipe-shaped article has a smooth surface formed with no piles constituted of parts of the short fibers protruding from the surface of the pipe-shaped article.

Furthermore, the layer(s) [B] of the fibrous sheet material has some fibers oriented in the thickness-wise direction thereof as well to moderate the problematic delaminating of any thin sheet off the sheet material. Because of this, however, the layer(s) [B] of the fibrous sheet material, when constricted to become thinner, may be increased in thickenss again due to its memory effect of tending to revert to the original form in the succeeding step of heat treatment to present a possibility of forming voids inside the final pipe-shaped article.

As a solution to this problem of void formation, according to the present invention, the layer [A] of the filament strands and/or the aggregation(s) thereof may be formed on the outside of the layer(s) [B] of the fibrous sheet material through filament winding thereof. This not only eliminates any resin-unimpregnated portions of the layer(s) [B] of the fibrous sheet material, but also squeezes the excessive impregnating resin out of the layer(s) [B] of the fibrous sheet material to provide a state of adequate impregnation.

Such filament winding can secure the uniformity of the pipe-shpaed article in the longitudinal direction thereof. Furthermore, the formation of the pipe-shaped article is naturally done under tension to minimize the delaminating thereof.

Various expensive filaments other than carbon fiber filaments may be considered as being usable as fiber filaments for use in filament winding to constrict the layer(s) [B] of the fibrous sheet material. However, they cannot provide a highly rigid pipe-shaped article by themselves. Furthermore, use of synthetic fiber filaments such as Kevlar fiber filaments has a possibility of developing defects such as cracks inside the pipe-shaped article in the step of heat curing because of a difference in thermal expansion coefficient between the synthetic fiber filaments and the layer(s) [B] of the fibrous sheet material. Accordingly, carbon fiber filaments must be used at least as the main component of the filament strands and/or the aggregation(s) thereof to make the two laminate materials identical with each other in quality.

In the present invention, a layer of a fiber cloth (fabric) or a parallel arrangement of fibrous objects which is mainly composed of a carbon fiber may be provided as a second intermediate layer [B'] between the layer [B] of the fibrous sheet material which may be the first intermediate layer and the layer [A] of the filament strands and/or the aggregation(s) thereof which is preferably the outermost layer. This entails a great reduction in the elastic deformation of the short fiber skeleton in the layer [B] of the fibrous sheet material, which deformation is liable to be caused by constricting the fibrous sheet material of the layer [B] through filament winding therearound of the filament strands and/or the aggregation(s) thereof to constitute the layer [A] while either beforehand, simultaneously or subsequently impregnating the fibrous sheet material with the resin, whereby an almost perfectly round pipe-shaped article can be easily produced.

In order to enhance the surface uniformity and roundness of the final pipe-shaped article, it is preferable that a layer [A'] of the filament strands and/or the aggregation(s) thereof of the same kind as described hereinbefore be provided with filament orientation in parallel with the axial direction of the mandrel on the outer surface of the layer [A] of the filament strands and/or the aggregation(s) thereof formed through filament winding.

The presence of the parallel oriented filament layer [A'] is more effective in enhancing the surface uniformity and roundness of the final pipe-shaped article in the case where the process of the present invention is practiced in combination with the aforementioned lamination molding method using a heat-shrinkable tape (film) or tubular material.

The number of layers [A] of the filament strands and/or the aggregation(s) is preferably in the range of 1 to 10, more preferably in the range of 2 to 5. The number of layers [B] of the fibrous sheet material is preferably in the range of 1 to 10, more preferably in the range of 1 to 3.

C. Laminating and Shaping:

The process for producing a carbon fiber-reinforced plastic pipe according to the present invention will now be described in sequence.

In the production of the carbon fiber-reinforced plastic pipe-shaped article according to the present invention, a plurality of laminated layers are formed around the outer surface of a mandrel through laminating of a layer(s) [A] of filament strands mainly composed of a carbon fiber and/or an aggregations thereof and a layer(s) [B] of a fibrous sheet material mainly composed of a carbon fiber according to a customary method, which are known in itself. This may be done either according to the procedure of impregnating a reinforcing fiber or shaped material thereof (encompassing an aggregation thereof) with a reinforcing resin beforehand, semi-curing the resin to form a prepreg, placing such prepregs around a mandrel and completely curing the resin (hereinafter referred to as the "prepreg procedure"), or the procedure of forming a plurality of laminated layers of the kind as described above and mainly composed of a carbon fiber, impregnating the laminated layers with a reinforcing resin, semi-curing the resin and thereafter appropriately curing the semi-cured resin by heating (hereinafter referred to as the "post-impregnation procedure").

In this case, it is preferable that the laminated pipe-shaped material in a state of the resin being semi-cured be covered with a heat-shrinkable tape (film) or tubular material before the heat curing of the resin.

In the process of the present invention, the prepreg procedure may be combined with the post-impregnation procedure. Particularly, the prepreg procedure is preferable for the layer(s) [A] of the filament strands mainly composed of the carbon fiber and/or the aggregation(s) thereof, while the post-impregnation procedure is preferable for the layer(s) [B] of the fibrous sheet material mainly composed of the carbon fiber because of its weakening when impregnated with the reinforcing resin.

In order to obtain a pipe-shaped article free from the defect of void formation from a preliminarily pipe-shaped, laminated material in a state of adequate impregnation with a resin, it is preferable that a heat-shirinkable film or tape material, such as a Teflon film or a polyester film, be wound around the preliminarily pipe-shaped, laminated material before the heat curing of the resin, or that a heat-shrinkable tubular material of, for example, Teflon or a polyester be used to cover the preliminarily pipe-shaped, laminated material before the heat curing of the resin.

As for the procedure of winding the layer [B] of the fibrous sheet material in other layer to constrict the layer [B] with the other layer, use of the procedure of tape or sheet winding of the filament strands mainly composed of the carbon fiber and/or the aggregation(s) thereof as the above-mentioned other layer around the layer [B] may be technically conceivable as well. However, filament winding of the filament strands and/or the aggregation(s) thereof at a given angle is more advantegeous in the present invention. In this case, although the filament winding angle may be arbitrarily chosen, filament winding to effect constriction of the layer [B] is preferably done at an angle of 0° (parallel) to 45° with the axial direction of a mandrel.

Instead of using the heat-shrinkable tape (film) or tubular material, a pipe mold coated with a release agent may be used to cover the preliminarily pipe-shaped, laminated material, which is then subjected to heat curing of the resin under constriction to obtain a void-free pipe-shaped article having a higher roundness. In this case, the heat curing is preferably first effected up to around the gel point of the reinforcing resin before initiation of pressing, or constriction. This provides the resin with an appropriate flowability, which entails formation of a pipe-shaped article little in maldistribution of the resin and scarce in voids.

In the present invention, the mandrel may be powdered with a Teflon powder as a release agent or sprayed with a dispersion of Teflon dispersed in a suitable solvent to make the laminated layers easy of release off the mandrel after completion of the process. In order to secure a uniform release agent layer and stave off the stimulative smell of the solvent if used, however, it is preferable to use a heat-shrinkable, release film or tube (for example, made of Teflon, polyethylene, polypropylene, or a polyester: Teflon is most preferable) by heating the same to bring the release film or tube in close contact with the mandrel.

Such a way of using the mandrel requires such a very low pressure to be applied in demolding that the resulting pipe-shaped article can be far more easily released off the mandrel to enable the mandrel to be repeatedly used, leading to a reduction in the production cost.

In the present invention, the carbon fiber-reinforced plastic pipe-shaped article may be coated with a metal such as nickel, chromium, or titanium. Such a metal coating may be provided either by preliminarily plating the reinforcing fiber mainly composed of the carbon fiber or by plating the carbon fiber-reinforced plastic pipe-shaped article. The metal coating can not only exhibit an aesthetic effect but also impart an electric conductivity and an abrasion resistance to the carbon fiber-reinforced plastc pipe-shaped article of the present invention.

The term "pipe" used herein is intended to encompass a tube, a roll, a pole, etc.

The carbon fiber-reinforced plastic pipe-shaped article of the present invention, which is lightweight and highly rigid, can be used as a power transmission shaft, a revolving cylinder for use in centrifugal separation, aviation parts, space craft parts, a high-pressure piping, a chemical reactor material, etc.

Appropriate orientation of the reinforcing fiber may provide high strengths, flexibility and fatigue resistance to the carbon fiber-reinforced plastic pipe-shaped article of the present invention, which can therefore be used as a calender roll for use in the production of plastic films, a mangle roll for use in liquid squeezing of textiles and paper, an air shaft for supporing bobbins for use in winding therearound sheet materials such as cloth, paper and films.

Orientation of carbon fiber filaments in an appropriate direction(s) can minimize the linear expansion coefficient of the carbon fiber-reinforced plastic pipe-shaped article of the present invention, which can therefore be used as foundation members for machine tools, machine parts and a material for use in optical instruments, etc.

Furthermore, the carbon fiber-reinforced plastic pipe-shaped article of the present invention can be used as a material capable of shielding light but transmitting X-rays therethrough and usable in medical instruments and measuring devices in place of metals.

The carbon fiber-reinforced plastic pipe-shaped article of the present invention can be produced in low cost because the fibrous sheet material of random arrangement as the main reinforcing carbon fiber material thereof is inexpensive. Furthermore, arrangement of the carbon fiber filaments having a high modulus of elasticity as the outermost layer can provide a high flexural rigidity to the carbon fiber-reinforced plastic pipe-shaped article of the present invention.

BEST MODES FOR CARRYING OUT THE INVENTION

The following Examples will now specifically illustrate the present invention in more detail, but should not be construed as limiting the scope of the invention.

Example 1

100 parts by weight of a bisphenol A epoxy resin (Epikote 828, manufactured by Yuka Shell Epoxy Kabushiki Kaisha) was mixed with 80 parts by weight of methyltetrahydrophthalic anhydride (HN-2200, manufactured by Hitachi Chemical Co., Ltd.) as a curing agent and 1 part by weight of 2-ethyl-4-methylimidazole (2E4MZ, manufactured by Shikoku Fine Chemical Kabushiki Kaisha) as a curing promotor to prepare an epoxy resin solution. Petroleum pitch type carbon fiber filament strands were impregnated with the epoxy resin solution kept at a temperature of 45 °C, and were wound around a mandrel of 80 mm in diameter at an angle of 45° with the axial direction of the mandrel by the filament winding method to form a layer of the carbon fiber filament strands having a unit weight of 900 $g/m^2$, around which a PAN type short carbon fiber paper was then wound to form a layer of the PAN carbon fiber having a unit weight of 120 $g/m^2$, around which the same epoxy-impregnated carbon fiber filament strands as used above were then wound at an angle of 45° with the axial direction of the mandrel by the filament winding method to form a layer of the carbon fiber filament strands having a unit weight of 900 $g/m^2$, around which the same epoxy-impregnated carbon fiber filament strands as used above were arrayed substantially in parallel with the axial direction of the mandrel to form a layer of the carbon fiber filament strands having a unit weight of 70 $g/m^2$. Thereafter, the epoxy resin was semi-cured at 90 °C for 2 hours by heating in air while revolving the mandrel. Thereafter, a heat-shrinkable Teflon tape was wound around the fiber-wound mandrel. The epoxy resin was cured at 130 °C for 4 hours by heating in a curing oven while revolving the mandrel at a low speed.

The resulting carbon fiber-reinforced plastic pipe-shaped article was highly rigid and highly uniform with a high roundness.

When petroleum pitch type carbon fiber filaments having a modulus of elasticity of $50 \times 10^3$

kgf/mm² was used in combination with a petroleum pitch type fibrous sheet material having an individual filament's modulus of elasticity of $20 \times 10^3$ kgf/mm² in the foregoing process, the resulting carbon fiber-reinforced plastic pipe-shaped article had a high rigidity comparable to that of a carbon fiber-reinforced plastic pipe-shaped article using the same weight of only PAN type carbon fiber filaments having a modulus of elasticity of $24 \times 10^3$ kgf/mm² as the reinforcing fiber.

Example 2

A carbon fiber-reinforced plastic pipe-shaped article was produced in substantially the same manner as in Example 1 except that the filament winding of the filament strands after the winding of the short fiber paper was omitted and sheet winding of the same epoxy-impregnated carbon fiber filament strands as used in Example 1 alone was done to form an outermost layer of the carbon fiber filament strands having a unit weight of 70 g/m². This pipe-shaped article was somewhat inferior in morphology in terms of surface uniformity and strain as well as inclusion of voids in the outermost layer to the pipe-shaped article of Example 1.

Example 3

A carbon fiber-reinforced plastic pipe-shaped article was produced in substantially the same manner as in Example 1 except that highly elastic pitch type short carbon fiber paper having a unit weight of 150 g/m² was used instead of the PAN type short carbon fiber paper.

This pipe-shaped article was superior in rigidity, uniformity and roundenss to the pipe-shaped article obtained in Example 1.

The carbon fiber-reinforced plastic pipe-shaped article of the present invention is advantageously inexpensive as a carbon fiber-reinforced plastic because of the use of a relatively inexpensive fibrous sheet material of random fiber arrangement.

**Claims**

1.  A carbon fiber-reinforced plastic pipe-shaped article comprising as the layers of reinforcing fiber materials at least one layer [A] of filament strands mainly composed of a carbon fiber and/or an aggregation(s) thereof and at least one layer [B] of a fibrous sheet material mainly composed of a carbon fiber.

2.  A carbon fiber-reinforced plastic pipe-shaped article as claimed in claim 1, which is of a multi-layer laminated structure comprising said at least one layer [A] of the filament strands and/or the aggregation(s) thereof mainly composed of the carbon fiber and said at least one layer [B] of the fibrous sheet material mainly composed of the carbon fiber which are laminated on each other.

3.  A carbon fiber-reinforced plastic pipe-shaped article as claimed in claim 2, wherein the innermost and outermost layers thereof is each constituted of a layer [A] of the filament strands mainly composed of the carbon fiber and/or the aggregation(s) thereof, and at least one intermediate layer is constituted of a layer [B] of the fibrous sheet material mainly composed of the carbon fiber.

4.  A carbon fiber-reinforced plastic pipe-shaped article as claimed in claim 1, 2 or 3, wherein said at least one layer [A] is a parallel arrangement of the filament strands mainly composed of the carbon fiber and/or the aggregation(s) thereof, or a laminated layer formed through filament winding of the filament strands mainly composed of the carbon fiber and/or the aggregation(s) thereof.

5.  A carbon fiber-reinforced plastic pipe-shaped article as claimed in claim 1, 2 or 3, wherein said fibrous sheet material in said at least one layer [B] is in the form of a member selected from the group consisting of a mat, a felt, a non-woven fabric, and a paper-like material which is mainly composed of short carbon fibers spread without any particular orientation thereof.

6.  A process for producing a carbon fiber-reinforced plastic pipe-shaped article comprising as the layers of reinforcing fiber materials at least one layer [A] of filament strands mainly composed of a carbon fiber and/or an aggregation(s) thereof and at least one layer [B] of a fibrous sheet material mainly composed of a carbon fiber: comprising the step (1) of forming around a mandrel and beforehand, simultaneously or subsequently impregnating with a resin at least one layer [A] of filament strands mainly composed of a carbon fiber and/or an aggregation(s) thereof and at least one layer [B] of a fibrous sheet material mainly composed of a carbon fiber to form a pipe-shaped, or cylindrical, carbon fiber-resin material, the step (2) of covering said pipe-shaped carbon fiber-resin material with a heat-shrinkable tape or tube, and the step (3) of curing said resin by heating.

7.  A process for producing a carbon fiber-reinforced plastic pipe-shaped article comprising as the layers of reinforcing fiber materials at least one layer [A] of filament strands mainly composed of a carbon fiber and/or an aggregation(s) thereof and at least one layer [B] of a fibrous sheet material mainly composed of a carbon fiber: comprising the step (1) of forming around a mandrel and beforehand, simultaneously or subsequently impregnating with a resin at least one layer [A] of filament strands mainly composed of a carbon fiber and/or an aggregation(s) thereof and at least one layer [B] of a fibrous sheet material mainly composed of a carbon fiber to form a pipe-shaped, or cylindrical, carbon fiber-resin material, the step (2) of semi-curing said resin, the step (3) of covering the resulting pipe-shaped carbon fiber-resin material with a mold, and the step (4) of curing the semi-cured resin by heating under constriction.